Europäisches Patentamt

European Patent Office

Office européen des brevets

(11) Veröffentlichungsnummer: **0 071 099**
**A1**

## (12) EUROPÄISCHE PATENTANMELDUNG

(21) Anmeldenummer: 82106342.7

(22) ·Anmeldetag: 15.07.82

(51) Int. Cl.³: **C 08 L 25/12**

(30) Priorität: 25.07.81 DE 3129378

(43) Veröffentlichungstag der Anmeldung:
09.02.83 Patentblatt 83/6

(84) Benannte Vertragsstaaten:
BE DE FR GB NL

(71) Anmelder: BASF Aktiengesellschaft
Carl-Bosch-Strasse 38
D-6700 Ludwigshafen(DE)

(72) Erfinder: Brandstetter, Franz, Dr.
Ritterbuechel 45
D-6730 Neustadt(DE)

(72) Erfinder: Hambrecht, Juergen, Dr.
Werderstrasse 30
D-6900 Heidelberg(DE)

(72) Erfinder: Stephan, Rudolf, Dr.
Homburger Strasse 19
D-6700 Ludwigshafen(DE)

(54) Themroplastische Formmasse.

(57) Die Erfindung betrifft eine thermoplastische Formmasse aus 50 - 90 Gew.% einer Hartkomponente A aus einem oder mehreren Copolymerisaten von Styrol und/oder α-Methylstyrol mit Acrylnitril, und 50 - 10 Gew.% eines Pfropfcopolymerisats B. Das Pfropfcopolymerisat wird gebildet aus

40 - 80 Gew.% eines vernetzten Acrylester-Polymerisates mit einer mittleren Teilchengröße von größer als 0,8 μm ($d_{50}$-Wert der integralen Masseverteilung) worauf
20 - 60 Gew.% einer Mischung von Styrol und Acrylnitril im Gewichtsverhältnis 88 : 12 bis 65 : 35 aufgepfropft ist.
Die erfindungsgemäßen Formmassen werden zur Herstellung von Formteilen verwendet.

Croydon Printing Company Ltd.

BASF Aktiengesellschaft                    O.Z.0050/035302

Thermoplastische Formmasse

Die Erfindung betrifft eine schlagfeste thermoplastische Formmasse aus einer Mischung von einem Styrol-Acrylnitril-Copolymerisat und einem Pfropfcopolymerisat von Styrol/Acrylnitril auf Polyacrylsäureester.

Zum Stand der Technik nennen wir:

(1) DE-AS 12 60 135 und
(2) DE-AS 19 11 882.

Die Herstellung schlagfester thermoplastischer Massen durch Abmischen einer Hartkomponente A, bestehend aus einem Copolymerisat von Styrol und Acrylnitril, mit einer Weichkomponente B - bestehend aus einem Pfropfcopolymerisat von einem Gemisch aus Styrol und Acrylnitril auf Polyacrylsäureester - ist aus (1) bekannt. Solche Formmassen werden auch als ASA-Polymerisate bezeichnet.

Der als Stammpolymerisat eingesetzte Polyacrylsäureester wird dabei durch Emulsionscopolymerisation von Acrylsäureestern von Alkanolen mit 4 bis 8 C-Atomen mit dem Acrylsäureester des Tricyclodecenylalkohols hergestellt. Dabei entstehen Latexteilchen mit einem Durchmesser von $\leq 0,1$ /u. Die anschließende Pfropfcopolymerisation wird vorzugsweise in Emulsion durchgeführt, wobei ein Gemisch von Styrol/Acrylnitril auf den Stammpolymerisatlatex der Polyacrylsäureester gepfropft wird.

Die so hergestellten Formmassen zeichnen sich gegenüber ähnlichen Formmassen mit Polyacrylsäureester als Stammpolymerisat, die aber keinen Acrylsäureester des Tricyclodecenylalkohols enthalten, durch höhere Steifigkeit und bessere Festigkeit aus. Gegenüber schlagfesten Formmassen,

Vo/P

deren Stammpolymerisat in der Weichkomponente aus Polydienen besteht, den sogenannten ABS-Formmassen, zeigen
sie eine verbesserte Alterungsbeständigkeit.

Aus (2) sind Formmassen bekannt, die als Weichkomponente B
ein Pfropfcopolymerisat von Acrylsäureester von Alkoholen
mit 4 bis 8 C-Atomen und Styrol/Acrylnitril mit einem
mittleren Teilchendurchmesser zwischen 0,15 und 0,8 /um
und mit enger Teilchengrößenverteilung besitzen.

Diese Formmassen besitzen zwar eine verbesserte Alterungsbeständigkeit, die aber für viele Anwendungsbereiche noch
nicht ausreicht.

Der Erfindung lag also die Aufgabe zugrunde, thermoplastische Formmassen mit verbesserter Alterungsbeständigkeit
zu schaffen.

Diese Aufgabe wird durch Formmassen gemäß Patentanspruch 1
gelöst.

Nachstehend wird der Aufbau der erfindungsgemäßen Formmasse aus den Komponenten A und B, die Herstellung der
Komponenten und der Formmasse beschrieben:

Komponente A:

Die Komponente A ist in einem Anteil von 50 bis 90 Gew.%,
vorzugsweise 55 bis 85 Gew.%, jeweils bezogen auf die
Summe A + B, in der erfindungsgemäßen Formmasse vorhanden.
Für die Komponente B gelten die entsprechenden Anteile
zu 100 %.

Die in den erfindungsgemäßen Mischungen enthaltene Komponente (A) ist eine Hartkomponente aus einem oder mehreren

0071099

Copolymerisaten von Styrol und/oder α-Methylstyrol mit Acrylnitril. Der Acrylnitril-Gehalt in diesen Copolymerisaten der Hartkomponente (A) soll 20 bis 40 Gew.%, bezogen auf das jeweilige Copolymerisat der Hartkomponente, betragen. Zu dieser Hartkomponente (A) zählen auch, wie nachstehend noch erläutert, die bei der Pfropfmischpolymerisation zur Herstellung der Komponente (B) entstehenden freien, nicht gepfropften Styrol/Acrylnitril-Copolymerisate. Je nach den bei der Pfropfmischpolymerisation für die Herstellung des Pfropfmischpolymerisates (B) gewählten Bedingungen kann es möglich sein, daß bei der Pfropfmischpolymerisation schon ein hinreichender Anteil an Hartkomponente (A) gebildet worden ist. Im allgemeinen wird es jedoch nötig sein, die bei der Pfropfmischpolymerisation erhaltenen Produkte mit zusätzlicher, separat hergestellter Hartkomponente (A) zu mischen.

Bei der separat hergestellten Hartkomponente (A) kann es sich um ein Styrol/Acrylnitril-Copolymerisat, ein α-Methylstyrol/Acrylnitril-Copolymerisat oder ein α-Methylstyrol/Styrol/Acrylnitril-Terpolymerisat handeln. Diese Copolymerisate können einzeln oder auch in Mischung miteinander für die Hartkomponente eingesetzt werden, so daß es sich bei der Hartkomponente (A) der erfindungsgemäßen Mischungen beispielsweise um eine Mischung aus einem Styrol/Acrylnitril-Copolymerisat und einem α-Methylstyrol/Acrylnitril-Copolymerisat handeln kann. In dem Fall, in dem die Hartkomponente (A) der erfindungsgemäßen Massen aus einer Mischung von einem Styrol/Acrylnitril-Copolymerisat und einem α-Methylstyrol/Acrylnitril-Copolymerisat besteht, soll der Acrylnitril-Gehalt der beiden Copolymerisate nicht mehr als 10 Gew.%, vorzugweise nicht mehr als 5 Gew.%, bezogen auf das Copolymerisat, voneinander abweichen. Die Hartkomponente (A) der erfindungsgemäßen Formmasse kann jedoch auch nur aus einem einzigen Styrol/Acrylnitril-Copolymerisat bestehen, nämlich dann, wenn bei der Pfropfmischpolymerisation zur Herstellung der Komponente (B) als auch bei der Herstellung der zusätzlichen, separat hergestellten Hartkomponenten von dem gleichen Monomer-Gemisch aus Styrol und Acrylnitril ausgegangen wird.

Die Hartkomponente (A) kann nach den herkömmlichen Methoden erhalten werden. So kann die Copolymerisation des Styrols und/oder $\alpha$-Methylstyrols mit dem Acrylnitril in Masse, Lösung, Suspension oder wäßriger Emulsion durchgeführt werden. Die Hartkomponente (A) hat vorzugsweise eine Viskositätszahl von 40 bis 100, insbesondere von 50 bis 85 $[\frac{ml}{g}]$o.

Komponente B:

Die Herstellung des erfindungsgemäß einzusetzenden Pfropfmischpolymerisats (B) erfolgt in zwei Stufen. Hierzu wird zunächst die Pfropfgrundlage (B$_1$) hergestellt.

Zunächst wird in der Grundstufe ein Latex hergestellt. Als Acrylsäurealkylester kommen dabei Monomere in Frage, die zu Acrylsäureester-Polymerisaten mit einer Glasübergangstemperatur, Tg, unter 0°C führen. Das Acrylsäureester-Polymerisat soll vorzugsweise eine Glasübergangstemperatur unter -20°C, insbesondere unter -30°C haben. Die Ermittlung der Glasübergangstemperatur des Acrylsäureester-Polymerisates kann z.B. nach der DSC-Methode (K.H. Illers, Makromol. Chemie 127 (1969), S. 1) erfolgen. Für die Herstellung der Acrylsäureester-Polymerisate kommen insbesondere die Acrylsäurealkylester mit 2 bis 8 Kohlenstoffatomen, vorzugsweise mit 4 bis 8 Kohlenstoffatomen, im Alkylrest in Betracht. Als Acrylsäurealkylester, die zur Herstellung der Acrylsäureester-Polymerisate geeignet sind, seien besonders Acrylsäure-n-butylester und Acrylsäureethylhexylester genannt. Die Acrylsäureester können
allein oder auch in Mischung eingesetzt werden.

Die Acrylsäurealkylester können zumindest teilweise durch
mindestens ein Comonomeres, wie Styrol, Vinylchlorid,
Alkylester der Methacrylsäure oder Acrylnitril ersetzt
werden. Dabei soll der Anteil an Comonomeren 1 bis
40 Gew.%, vorzugsweise 5 bis 30 Gew.%, bezogen auf Monomere(s), betragen.

Zusätzlich werden übliche vernetzend wirkende, mindestens
2 funktionelle Gruppen aufweisende, Monomere mitverwendet. Hierzu wird gegebenenfalls die Polymerisation der
Acrylsäureester und ggf. der Comonomeren in Gegenwart
von 0,5 bis 10 Gew.%, vorzugsweise 1 bis 5 Gew.%, bezogen
auf die Gesamtmenge an Monomeren und Comonomeren, zumindest eines die Vernetzung bewirkenden Monomeren durchgeführt. Als solche bi- oder mehrfunktionelle Vernetzungs-Monomere eignen sich Monomere, die vorzugsweise
zwei, gegebenenfalls auch mehr, zur Copolymerisation
befähigte ethylenische Doppelbindungen enthalten. Geeignete Vernetzungs-Monomere sind beispielsweise Divinylbenzol, Diallylmaleat. Als besonders günstiges Vernetzungs-
Monomeres hat sich der Acrylsäureester des Tricyclodecenylalkohols erwiesen (vgl. DE-PS 12 60 135).

Die Polymerisation wird in Gegenwart von mindestens einem wasserunlöslichen organischen Initiator durchgeführt.
Dabei kommen insbesondere in Frage: Diacylperoxide und
Perester. Hierbei kann es sich beispielsweise handeln um:

Acetylcyclohexansulfonyl-peroxid, Peroxy-dicarbonate,
Diisopropyl-peroxydicarbonat, t-Amylperneodecanoat,
t-Butylperneodecanoat, Bis-(2,4-dichlorbenzoyl)-peroxid,

0071099

t-Butylperpivalat, Bis-(3,5,5-trimethylhexanoyl)-peroxid, Bis-(o-toluoyl)-peroxid, Didecanoylperoxid, Dioctanoyl-peroxid, Dilauroylperoxid, Succinylperoxid, Diacetyl-peroxid, Dibenzoylperoxid, t-Butyl-per-2-äthylhexanoat, Bis-(4-chlorbenzoyl)-peroxid, t-Butylperisobutyrat, t-Butylpermaleinat, 1,1-Di-(t-butylperoxy)-3,5,5-tri-methyl-cyclohexan, 1,1-Di(t-butylperoxy)-cyclohexan, t-Butylperoxy-isopropylcarbonat, t-Butyl-per-3,5,5-trimethylhexanol, 2,5-Dibenzoylperoxy-2,5-dimethylhexan, t-Butylperacetat, t-Butylperbenzoat, 2,2-Bis-(t-butylperoxy)-butan), 2,2-Bis-(t-butylperoxy)-propan, Dicumylperoxid, 3-t-Butylperoxy-3-phenylphthalid, Di-cumylperoxid, 2,5-Di-butylperoxy-2,5-dimethylhexan, $\alpha,\alpha'$-Di-(t-butylperoxy-isopropyl)-benzol, Di-t-butylperoxid und 2,5-(Di-t-butylperoxy)-2,5-dimethyl-hexin-3.

Bevorzugt wird Acetylcyclohexansulfonylchlorid, t-Butylperneodecanoat, t-Butylperpivalat, Dilauroylperoxid und Dibenzoylperoxid verwendet. Es sind aber auch Kombinationen verschiedener Initiatoren möglich, wie t-Butylperneodecanoat und t-Butylperpivalat oder Acetylcyclohexansulfonylchlorid und Dilauroylperoxid.

Die Initiatoren werden in Mengen von 0,01 bis 0,9, vorzugsweise von 0,03 bis 0,3 Gew.%, bezogen auf Monomere(s), verwendet. Dabei kann die gesamte Initiatormenge oder ein Teil (in der Regel 1/6 bis zu 1/3) vorgelegt werden.

Der Initiator kann aber auch, dies ist bevorzugt, teilweise oder in Stufen zur Reaktionslösung gegeben werden (Dosierung). Dazu kann der Initiator in einem inerten Lösungsmittel gelöst oder in Form einer Mikrosuspension verwendet werden.

Es können die üblichen vorzugsweise anionischen Emulgatoren verwendet werden, wie Alkalisalze von Alkyl- oder Acrylsulfonsäuren, Alkylsulfate, Fettalkoholsulfonate, Salze von Fettsäuren mit 10 bis 30 Kohlenstoffatomen oder Harzseifen. Bevorzugt werden Alkylsulfate. Ganz besonders geeignet ist Na-dodecylsulfat und $C_{12}$- bis $C_{18}$-Alkylsulfat. Die Emulgatoren werden in Mengen von 0,1 bis 5, vorzugsweise 0,6 bis 2 Gew.%, bezogen auf die Monomere(s) eingesetzt.

Als langkettige Alkohole kommen aliphatische Alkohole mit 10 bis 30 C-Atomen in der Kette in Betracht. Es kann sich dabei beispielsweise um Laurylalkohol, Cetylalkohol, Oleylalkohol und Stearylalkohol handeln. Der Alkohol wird in Mengen von 0,1 bis 3, vorzugsweise 0,2 bis 2 Gew.% bezogen auf Monomere(s) angewendet.

Die Polymerisation wird unter üblichen Bedingungen von Druck und Temperatur, durchgeführt; es werden Temperaturen von 30 bis 90°C bevorzugt. Es werden übliche Verhältnisse von Wasser : Monomer im Bereich von 4 : 1 bis 2 : 3 angewendet.

Zur Durchführung der Polymerisation wird zunächst aus Wasser, dem Emulgator und dem langkettigen Alkohol eine Mischung hergestellt, die oberhalb der Schmelztemperatur des Alkohols 5 bis 30 Minuten gerührt wird. Danach stellt man gegebenenfalls die gewünschte Polymerisationstemperatur ein. Hierauf beginnt man unmittelbar, d.h. ohne vorherige zusätzliche Homogenisierung mit der Polymerisation. Dies kann z.B. bevorzugt dadurch geschehen, daß man die Gesamtmenge an Monomeren (m) und gegebenenfalls einen Anteil (von z.B. 1/6 bis max. 50 Gew.%) des Initiators vorlegt, d.h. in die vorstehend beschriebene Mischung einbringt, und die Gesamtmenge oder den Rest des Initia- "tors in Lösung oder in Mikrosuspension nach Einsetzen der Polymerisation zudosiert, um einen kontinuierlichen Polymerisationsverlauf zu erhalten. Andererseits kann man aber auch die gesamte Initiatormenge und nur einen Teil an Monomeren(m) vorlegen und die restliche Monomermenge zudosieren. Es ist ferner möglich, die Gesamtmenge an Initiator vorzulegen und die Gesamtmenge an Monomeren(m) zulaufen zu lassen. Gleichermaßen kann eine Teilmenge an Monomeren(m) und mindestens eine Teilmenge Initiator vorgelegt werden, um zum Erfolg zu gelangen. Auf die beschriebene Art und Weise können Latexteilchen von $> 0,8 \mu m$ erhalten werden. Die mittlere Teilchengröße der Pfropfgrundlage soll größer als $0,8 \mu m$ in den erfindungsgemäßen Formmassen sein. Bevorzugterweise liegt sie im Bereich von 0,85 bis $20 \mu m$; ganz besonders werden Pfropfgrundlagen mit einer mittleren Teilchengröße von 0,9 bis $6 \mu m$ bevorzugt.

Zur Herstellung des Pfropfmischpolymerisats (B) aus (B1) wird dann in einem zweiten Schritt in Gegenwart des so erhaltenen Latex des Acrylsäureester-Polymerisats ein Monomeren-Gemisch aus Styrol und Acrylnitril polymerisiert, wobei das Gewichtsverhältnis von Styrol zu Acrylnitril in dem Monomeren-Gemisch im Bereich von 88 : 12 bis 65 : 35, vorzugsweise bei 70 : 30, liegen soll. Es ist vorteilhaft, diese Pfropfmischpolymerisation von Styrol und Acrylnitril auf das als Pfropfgrundlage dienende Acrylsäureester-Polymerisat wieder in wäßriger Emulsion unter den üblichen, oben aufgeführten Bedingungen durchzuführen. Die Pfropfmischpolymerisation kann zweckmäßig im gleichen System erfolgen wie die Polymerisation zur Herstellung der Pfropfgrundlage ($B_1$), wobei, falls notwendig, weiterer Emulgator, langkettiger Alkohol und Initiator zugegeben werden kann. Das aufzupfropfende Monomeren-Gemisch aus Styrol und Acrylnitril kann dem Reaktionsgemisch auf einmal, absatzweise in mehreren
Stufen oder vorzugsweise kontinuierlich während der Polymerisation zugegeben werden. Die Pfropfmischpolymerisation des Gemisches von Styrol und Acrylnitril in Gegenwart des Acrylsäureester-Polymerisats wird so geführt,
daß ein Pfropfgrad von 20 bis 60 Gew.%, vorzugsweise
von 40 bis 50 Gew.%, im Pfropfmischpolymerisat (B) resultiert. Da die Pfropfausbeute bei der Pfropfmischpolymerisation nicht 100%ig ist, muß eine etwas größere Menge
des Monomeren-Gemisches aus Styrol und Acrylnitril bei
der Pfropfmischpolymerisation eingesetzt werden, als
es dem gewünschten Pfropfgrad entspricht. Die Steuerung der Pfropfausbeute bei der Pfropfmischpolymerisation und somit des Pfropfgrades des fertigen Pfropfmischpolymerisats (B) ist jedem Fachmann geläufig und kann
beispielsweise u.a. durch die Dosiergeschwindigkeit der
Monomeren oder durch Reglerzugabe erfolgen (Chauvel,
Daniel, ACS Polymer Preprints 15 (1974), Seite 329 ff.).
Bei der Emulsions-Pfropfmischpolymerisation entstehen im
allgemeinen etwa 5 bis 15 Gew.%, bezogen auf das Pfropfmischpolymerisat, an freiem, ungepfropftem Styrol/Acrylnitril-Copolymerisat. Der Anteil des Pfropfmischpolymerisats (B) in dem bei der Pfropfmischpolymerisation erhaltenen Polymerisationsprodukt wird nach der weiter unten
angegebenen Methode ermittelt.

Herstellung der erfindungsgemäßen Formmasse:

Das Mischen der Komponenten (A) und (B) kann nach jeder
beliebigen Weise nach allen bekannten Methoden erfolgen.
Wenn die Komponenten, z.B. durch Emulsions-Polymerisation
hergestellt worden sind, ist es z.B. möglich, die erhaltenen Polymer-Dispersionen miteinander zu vermischen,
darauf die Polymerisate gemeinsam auszufällen und das Polymerisat-Gemisch aufzuarbeiten. Vorzugsweise geschieht jedoch das Mischen der Komponenten (A) und (B) durch gemeinsames Extrudieren, Kneten oder Verwalzen der Komponenten, wobei die Komponenten notwendigenfalls zuvor aus der bei der Polymerisation erhaltenen Lösung oder wäßrigen Dispersion isoliert worden sind. Die in wäßriger Dispersion erhaltenen Produkte der Pfropfmischpolymerisation, Komponente (B), können auch nur teilweise entwässert werden und als feuchte Krümel mit der Hartkomponente (A) vermischt werden, wobei dann während des Vermischens die vollständige Trocknung der Pfropfmischpolymerisate erfolgt.

Die erfindungsgemäßen Mischungen aus den Komponenten (A) und (B) können als weitere Komponente (C) alle Zusatz- und/oder Hilfsstoffe enthalten, wie sie für ABS- und ASA-Polymerisate üblich und gebräuchlich sind. Als solche Zusatz- und/oder Hilfsstoffe seien beispielsweise genannt: Füllstoffe, weitere verträgliche Kunststoffe, Farbstoffe oder Pigmente, Antistatika, Antioxidantien, Flammschutzmittel und Schmiermittel. Die Zusatz- und Hilfsstoffe werden in üblichen und wirksamen Mengen, vorzugsweise in Mengen von 0,1 bis zu insgesamt etwa 30 Gew.%, bezogen auf die Mischung (A + B), eingesetzt.

Als Antistatika eignen sich z.B. Polyäthylenglykole, Polypropylenglykole und insbesondere Copolymere aus Äthylenoxid und Propylenoxid. Ferner kommen noch Salze von Alkyl- oder Alkylarylsulfonsäuren oder äthoxylierte langkettige Alkylamine in Frage.

Die erfindungsgemäßen Formmassen lassen sich nach den für die Thermoplastverarbeitung üblichen Verfahren, wie z.B. Extrusion und Spritzgießen, zu den verschiedenartigsten Formkörpern, wie z.B. Gehäuse für Haushaltsgeräte, Telefone, Platten, Rohre und Kinderspielzeug verarbeiten. Wie erwähnt, eignen sich die erfindungsgemäßen Massen dabei insbesondere zur Herstellung von farbigen Formteilen bzw. Formkörpern der genannten Art, wie sie insbesondere bei Gehäusen für Elektrogeräte, Kinderspielzeug und Möbel Anwendung finden.

Die in der vorliegenden Anmeldung beschriebenen Parameter wurden wie folgt bestimmt:

1. Bei den mittleren Teilchengrößen gemäß vorliegender Erfindung handelt es sich in allen Fällen um das Gewichtsmittel der Teilchengrößen, wie sie mittels einer analytischen Ultrazentrifuge entsprechend der Methode von W. Scholtan und H. Lange, Kolloid-Z. und Z. Polymere 250 (1972), Seiten 782 - 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als $d_{50}$-Wert der integralen Massenverteilung bezeichnet wird, ist dabei als der Teilchendurchmesser definiert, bei dem 50 Gewichtsprozent der Teilchen einen kleineren Durchmesser haben als der Durchmesser, der dem $d_{50}$-Wert entspricht. Ebenso haben dann 50 Gew.% der Teilchen einen größeren Durchmesser als der $d_{50}$-Wert.

2. Die Ermittlung der Pfropfausbeute und somit des Anteils des Pfropfmischpolymerisats in dem bei der Pfropfmischpolymerisation erhaltenen Produkt erfolgt durch Extraktion dieses Polymerisationsproduktes mit Methyläthylketon bei 25°C. Der Pfropfgrad der Pfropfmischpolymerisate, d.h. der prozentuale Anteil vom im Pfropfmischpolymerisat enthaltenen gepfropften Styrol und Acrylnitril, ergibt sich am einfachsten aus der elementaranalytischen Bestimmung von Stickstoff (aus Acrylnitril) und Sauerstoff (aus Acrylester) im in Methylethylketon unlöslichen Gel.

3. Die Schlagzähigkeit der Formmasse wurde nach DIN 53 453 an gespritzten Normalkleinstäben bei 23°C ermittelt. Die Spritztemperatur für die Normkleinstäbe betrug dabei 250°C.

4. Die Viskositätszahlen, VZ, wurden in 0,5 %-iger Lösung in Dimethylformamid als Lösungsmittel bei einer Temperatur von 25°C ermittelt (analog DIN 53 726).

Für die Durchführung der in den Beispielen und Vergleichsversuchen beschriebenen Versuche wurden die folgenden Produkte verwendet:

Hartkomponente A

Ein Monomeren-Gemisch aus Styrol und Acrylnitril wurde unter üblichen Bedingungen in Lösung polymerisiert. Das erhaltene Styrol/Acrylnitril-Copolymerisat hatte einen Acrylnitril-Gehalt von 35 % und eine Viskositätszahl von 80 ml/g.

Pfropfmischpolymerisat B, Typ I:

In einem 10 l Rührgefäß, das mit einem Blattrührer ausgerüstet ist, werden 3000 g dest. Wasser, 32 g Na-laurylsulfat und 10 g Stearylalkohol bei 60°C 10 Minuten gerührt. Dazu gibt man danach 2000 g Butylacrylat, 40 g Tricyclodecenylacrylat, und im Verlauf von 2 Stunden 1,2 g Dilauroylperoxid und 0,4 g t-Butylperpivalat bei 70°C

unter Rühren. Nach 5 Stunden ist die Reaktion beendet. Die mittlere Teilchengröße ($d_{50}$-Wert) liegt bei 915 nm.

4000 g der Mikrosuspension, 3000 g dest. Wasser, 2,89 g t-Butylperoctoat und 22,5 g Na-laurylsulfat werden in einem 10 l Rührgefäß auf 75°C erwärmt. Dazu gibt man im Verlauf von 4 Stunden kontinuierlich ein Gemisch aus 482 g Styrol und 161 g Acrylnitril. Nach der Zugabe der Monomeren läßt man noch 1 Stunde bei 75°C nachreagieren. Das Pfropfmischpolymerisat wird durch Fällen mit einer Calciumchloridlösung isoliert, abgeschleudert und im Vakuum getrocknet.

Pfropfmischpolymerisat B, Typ II:

3000 g dest. Wasser, 32 g Na-laurylsulfat und 12 g Stearylalkohol werden bei 50°C mit einem schnellaufenden Rührer (Tomax) 1 Minute emulgiert. Dazu gibt man 2000 g n-Butylacrylat, 40 g Tricyclodecenylacrylat, 1,2 g Dilauroylperoxid und 0,4 g t-Butylperpivalat und polymerisiert in einem 10 l Rührgefäß bei 70°C. Nach 5 Stunden wird eine Mikrosuspension mit einem Feststoffgehalt von 35,0 Gew.% erhalten. Die mittlere Teilchengröße ($d_{50}$-Wert) liegt bei 1,23 um. Die Pfropfung erfolgt analog Typ I.

Die Erfindung wird durch die nachfolgenden Beispiele und Vergleichsversuche näher erläutert. Die darin genannten Teile und Prozente beziehen sich, sofern nichts anderes angegeben, auf das Gewicht.

Beispiele 1+2:

Die in der Tabelle genannten Teile der Komponente A sowie B (Typ I und Typ II) wurden in einem Extruder bei 250°C gemischt. An Proben des Extruders werden die in der Tabelle angeführten Parameter bestimmt.

Zur Beurteilung der Alterungsbeständigkeit wurden aus den Mischungen auf einer Spritzgußmaschine vom Typ Arburg--Allrounder 200 bei 250°C Normkleinstäbe hergestellt. Diese wurden in dem Xenotestgerät 1200 der Firma Heraeus bei 35°C und einer Luftfeuchtigkeit von 60 % belichtet. Nach 200 Stunden wurde an den Prüfkörpern die Schlagzähigkeit ermittelt.

Zum Vergleich sind in der Tabelle die Werte mit aufgenommen worden, die an Formmassen A und B vom Stand der Technik gemäß (2) erhalten wurden. Dabei entsprechen die Versuche A und B dem Beispiel aus (2).

Aus dem Vergleich der Ergebnisse ist ersichtlich, daß die erfindungsgemäßen Formmassen eine wesentlich verbesserte Alterungsbeständigkeit bei gleichzeitig verbessertem Fließverhalten besitzen.

O.Z. 0050/035302

Tabelle

| Beispiele | Komponente A [Gew.-Teile] | Komponente B [Gew.-Teile] | $d_{50}$-Wert [$\mu$m] | Schlagzähigkeit nach 200 Stunden Bewitterung [$KJ/m^2$] |
|---|---|---|---|---|
| 1 | 55 | 45 | 0,915 | nicht gebrochen |
| 2 | 55 | 45 | 1,23 | nicht gebrochen |
| Vergleichs-versuche | | | | |
| A | 55 | 45 | 0,3 | 27,3 |
| B | 55 | 45 | 0,5 | 36,2 |

Patentansprüche

1. Thermoplastische Formmasse, enthaltend

A) 50 - 90 Gew.%, bezogen auf A + B, einer Hartkomponente aus einem oder mehreren Copolymerisaten von Styrol und/oder $\alpha$-Methylstyrol mit Acrylnitril, wobei diese Copolymerisate 20 bis 40 Gew.% Acrylnitril einpolymerisiert enthalten.

B) 50 - 10 Gew.%, bezogen auf A + B, mindestens eines Pfropfcopolymerisats, das gebildet wird aus

($B_1$) 40 - 80 Gew.%, bezogen auf (B), eines vernetzten Acrylester-Polymerisates mit einer großen mittleren Teilchengröße ($d_{50}$-Wert der integralen Masseverteilung) und mit einer Glasübergangstemperatur, Tg, unterhalb von $0^o$C, worauf

($B_2$) 20 - 60 Gew.%, bezogen auf (B), einer Mischung von Styrol und Acrylnitril im Gewichtsverhältnis 88 : 12 bis 65 : 35 aufgepfropft ist, dadurch gekennzeichnet, daß die mittlere Teilchengröße der Pfropfgrundlage ($B_1$) größer als 0,8 $\mu$m ist.

2. Verwendung von Formmassen gemäß Anspruch 1 zur Herstellung von Formteilen.

3. Formteile aus Formmassen gemäß Anspruch 1.

0071099

Nummer der Anmeldung

**EUROPÄISCHER RECHERCHENBERICHT**

EP 82 10 6342

## EINSCHLÄGIGE DOKUMENTE

| Kategorie | Kennzeichnung des Dokuments mit Angabe. soweit erforderlich, der maßgeblichen Teile | Betrifft Anspruch | KLASSIFIKATION DER ANMELDUNG (Int. Cl. ³) |
|---|---|---|---|
| D,X | DE-B-1 260 135 (BASF) *Patentansprüche* | 1-3 | C 08 L 25/12 |
| D,X | DE-A-1 911 882 (BASF) *Patentansprüche* | 1-3 | |

RECHERCHIERTE SACHGEBIETE (Int. Cl. ³)

C 08 L 25/12

Der vorliegende Recherchenbericht wurde für alle Patentansprüche erstellt.

| Recherchenort | Abschlußdatum der Recherche | Prüfer |
|---|---|---|
| DEN HAAG | 15-10-1982 | FOUQUIER J.P. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82